# EUROPEAN PATENT SPECIFICATION

(11) **EP 3 370 294 B1**
(45) Date of publication and mention of the grant of the patent: **28.06.2023**
(21) Application number: 17792399.2
(22) Date of filing: 01.04.2017
(51) Int. Cl.: H01M 50/414, H01M 50/437, H01M 4/66, H01M 4/134, H01M 10/0525, H01M 10/0567, H01M 4/1395, H01M 4/36, H01M 10/0585, H01M 10/0568, H01M 10/0569, H01M 4/485, H01M 4/505, H01M 4/525, H01M 4/58, H01M 4/80, H01M 4/46

(54) **SECONDARY BATTERY AND PREPARATION METHOD THEREFOR**
SEKUNDÄRBATTERIE UND HERSTELLUNGSVERFAHREN DAFÜR
PILE RECHARGEABLE ET SON PROCÉDÉ DE PRÉPARATION

(30) Priority: 06.05.2016 WO PCT/CN2016/081346
(43) Date of publication of application: 05.09.2018
(73) Proprietor: Real Power Industrial Limited Company, Shenzhen, Guangdong 518055 (CN)
(72) Inventor: TANG, Yongbing, Shenzhen Guangdong 518055 (CN); SHENG, Maohua, Shenzhen Guangdong 518055 (CN); ZHANG, Fan, Shenzhen Guangdong 518055 (CN); JI, Bifa, Shenzhen Guangdong 518055 (CN)
(74) Representative: de Arpe Fernandez, Manuel
(86) International application number: PCT/CN2017/079275
(87) International publication number: WO 2017/190572

(56) References cited:
- EP-A1- 3 093 914
- EP-A1- 3 379 619
- CN-A- 103 094 583
- CN-A- 103 730 683
- CN-A- 105 449 186
- CN-A- 105 449 186
- CN-U- 203 707 250
- JP-A- H09 223 496
- JP-A- 2005 294 013
- US-A1- 2004 058 248
- US-A1- 2005 238 956
- US-A1- 2011 165 462
- US-A1- 2015 288 029
- US-A1- 2016 197 376
- US-A1- 2017 263 938

## Description

### Technical Field

The present disclosure relates to the field of batteries, and in particular to a secondary battery and a preparation method therefor.

### Background Art

With the development of the level of modern life as well as science and technology, people are consuming and requiring more and more energy, and seeking a new type of energy has become an urgent need today. Lithium ion battery has become a preferred object as a power supply for current electronic products because of its high specific capacity, long cycle life, and high price-quality ratio. Core components of the lithium ion battery generally comprise a positive electrode, a negative electrode, and an electrolyte. A commercial lithium ion battery comprises a transition metal oxide or a polyanionic metal compound as the positive active material, graphite or carbon as the negative active material, and an ester-based electrolyte as the electrolyte. However, when graphite is used as the negative active material, graphite occupies a large part of the volume and weight of the battery, which limits the capacity and energy density of the lithium ion battery, and increases the complexity of the production procedures and the production cost. US2004/058248 and JP2005294013 disclose a porous aluminium foil. In US2004/058248 this is alloyed with lithium and laminated on a carbonaceous material (24a, figure 2). JP2005294013 discloses that aluminium coated with carbon is used as a negative electrode in prior art techniques ([0009],[0010]).

### Disclosure of the Invention

In order to overcome the technical problems described above, the present disclosure provides a secondary battery and a preparation method therefor,, and is intended to solve the problem that the existing lithium battery, in which graphite is used as a negative active material, has a low capacity and energy density, is produced by a complex production process, and has a high production cost.

In a first aspect, the present disclosure provides a secondary battery comprising a negative electrode, an electrolyte, a separator, and a positive electrode, wherein
the negative electrode comprises a negative current collector; the negative current collector comprises a metal or a metal alloy or a metal composite conductive material, and the negative current collector also acts as a negative active material;
the electrolyte comprises an electrolyte salt and a solvent, and the electrolyte salt is a lithium salt;
the positive electrode comprises a positive current collector and a positive active material layer, the positive active material layer comprises a positive active material capable of reversibly intercalating and de-intercalating lithium ions, and the positive current collector comprises a metal or a metal alloy or a metal composite conductive material.

Specifically, the positive active material includes one or several of, or a composite material of one of, lithium cobalt oxide, lithium nickel oxide, lithium manganese oxide, lithium iron phosphate, lithium nickel cobalt oxide binary material, spinel-structured lithium manganese, lithium nickel cobalt manganese oxide ternary material, and a layered lithium-rich high manganese material.

Specifically, the negative current collector includes one of aluminum, magnesium, lithium, vanadium, copper, iron, tin, zinc, nickel, titanium, and manganese, or an alloy of any one thereof, or a composite of any one thereof..

Preferably, the negative current collector is aluminum.

Further, the structure of the negative current collector is an aluminum foil, or porous aluminum, or porous aluminum coated with a carbon material, or a multilayered composite material of aluminum.

Specifically, the positive current collector includes one of, or a composite of any one metal of, or an alloy of any one metal of, aluminum, magnesium, lithium, vanadium, copper, iron, tin, zinc, nickel, titanium, and manganese.

Preferably, the positive current collector is aluminum.

Specifically, the electrolyte includes, but is not limited to, one or several of lithium hexafluorophosphate, lithium perchlorate, lithium tetrafluoroborate, lithium acetate, lithium salicylate, lithium acetoacetate, lithium carbonate, lithium trifluoromethanesulfonate, lithium lauryl sulfate, lithium citrate, lithium bis(trimethylsilyl)amide, lithium hexafluoroarsenate, and lithium bis(trifluoromethanesulfonyl)imide, and has a concentration ranging from 0.1 to 10 mol/L. Further, the concentration of the electrolyte salt is 0.5 to 2 mol/L.

Specifically, the solvent includes one or several of ester, sulfone, ether, and nitrile-based organic solvents, or ionic liquids.

Preferably, the solvent includes one or more of propylene carbonate, ethylene carbonate, butylene carbonate, diethyl carbonate, dimethyl carbonate, dipropyl carbonate, ethyl methyl carbonate, methyl propyl carbonate, dibutyl carbonate, butyl methyl carbonate, methyl isopropyl carbonate, methyl ester, methyl formate, methyl acetate, *N,N*-dimethylacetamide, fluoroethylene carbonate, methyl propionate, ethyl propionate, ethyl acetate, γ-butyrolactone, tetrahydrofuran, 2-methyltetrahydrofuran, 1,3-dioxolane, 4-methyl-1,3-dioxolane, dimethoxymethane, 1,2-dimethoxy ethane, 1,2-dimethoxy propane, triethylene glycol dimethyl ether, dimethyl sulfone, dimethyl ether, ethylene sulfite, propylene sulfite, dimethyl sulfite, diethyl sulfite, and crown ether.

Further, the electrolyte also comprises an additive including one or several of ester, sulfone, ether, nitrile or alkene-based organic additives.

Preferably, the additive includes one or several of fluoroethylene carbonate, vinylene carbonate, vinyl ethylene carbonate, 1,3-propanesultone, 1,4-butanesultone, ethylene sulfate, propylene sulfate, vinylene sulfate, ethylene sulfite, propylene sulfite, dimethylsulfite, diethylsulfite, vinylene sulfite, methyl chloroformate, dimethyl sulfoxide, anisole, acetamide, diazine, pyrimidine, crown ether/12-crown-4, crown ether/18-crown-6, 4-fluoroanisole, fluorinated noncyclic ether, difluoromethyl ethylene carbonate, trifluoromethyl ethylene carbonate, chloroethylene carbonate, bromoethylene carbonate, trifluoromethyl phosphonic acid, bromobutyrolactone, ethyl fluoroacetate, phosphate, phosphite, phosphazene, ethanolamine, carbodiimide, cyclobutyl sulfone, 1,3-dioxolane, acetonitrile, a long-chain alkene, aluminum oxide, magnesium oxide, barium oxide, sodium carbonate, calcium carbonate, carbon dioxide, sulfur dioxide, and lithium carbonate.

Preferably, the additive is vinylene carbonate contained in an amount of 5 wt%.

Preferably, the positive active material layer also comprises a conductive agent and a binder, the content of the positive active material is 60 to 95 wt%, the content of the conductive agent is 0.1 to 30 wt%, and the content of the binder is 0.1 to 10 wt%.

In a second aspect, the present disclosure also provides a method for preparing the secondary battery described above, comprising:
preparing a negative electrode of the battery, wherein a metal or a metal alloy or a metal composite conductive material is cut into a desired size, washed, and then used as a battery negative electrode, the metal or metal alloy or metal composite conductive material acting as both a negative current collector and a negative active material;
preparing an electrolyte, wherein a certain amount of a lithium salt as an electrolyte salt is weighed out, added to a corresponding solvent, and fully stirred and dissolved to provide an electrolyte;
preparing a separator, wherein a porous polymer film, an inorganic porous film or a glass fiber-based film is cut into a desired size and washed clean;
preparing a battery positive electrode, wherein a positive active material, a conductive agent and a binder are weighed out in a certain ratio, added to a suitable solvent and sufficiently grinded into a uniform slurry; a metal or a metal alloy or a metal composite conductive material is taken and used as a positive current collector after its surface is washed; and then the slurry is uniformly applied to the surface of the positive current collector, and after the slurry is completely dried to form a positive active material layer, the positive current collector with the positive active material layer is cut to provide a battery positive electrode with a desired size; and
assembling the battery negative electrode, the electrolyte, the separator, and the battery positive electrode sequentially to provide a secondary battery.

Compared with the prior art, the present disclosure has the following advantageous effects: due to the elimination of the conventional negative active material, the weight, volume and manufacturing cost of the battery are effectively reduced, and the production procedures are simplified; the capacity of the battery is effectively enhanced by using a negative current collector composed of a metal or a metal alloy or a metal composite also as a negative active material simultaneously; with the reduced weight and volume of the battery and the enhanced capacity of the battery, the energy density of the battery is remarkably increased, and the battery has a good charging and discharging cycle performance.

### Brief Description of Drawings

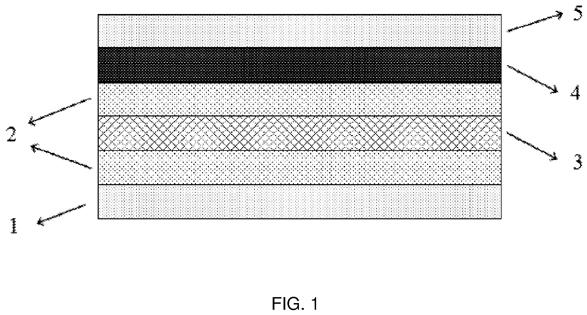

FIG. 1 is a schematic structural diagram of the secondary battery provided in an embodiment of the present disclosure.

### Detailed Description of Embodiments

The present disclosure will be further described in detail below with reference to the accompanying drawing and specific embodiments. The following description is illustrative of a preferred embodiment of the present disclosure. It should be noted that a number of improvements and modifications may be made by those skilled in the art without departing from the principle of the embodiments of the present disclosure, and such improvements and modifications are also considered within the scope of the present disclosure.

FIG. 1 is a schematic structural diagram of a secondary battery provided in an embodiment of the present disclosure. Referring to FIG. 1, a secondary battery provided in an embodiment of the present disclosure comprises a battery negative electrode 1, an electrolyte 2, a separator 3, a battery positive electrode (comprising a positive active material layer 4 and a positive current collector 5); wherein the battery negative electrode 1 comprises a negative current collector, the negative current collector comprises a metal or a metal alloy or a metal composite conductive material, and the negative current collector also acts as a negative active material; the electrolyte 2 comprises an electrolyte salt and a solvent, and the electrolyte salt is a lithium salt; the battery positive electrode comprises a positive current collector 5 and a positive active material layer 4, the positive current collector comprises metal or metal alloy or metal composite conductive material, and the positive active material layer comprises a positive active material capable of reversibly intercalating and de-intercalating lithium ions.

The working mechanism of the battery provided in the embodiment of the present disclosure is as follows: the secondary battery provided in the embodiment of the present disclosure does not contain a negative active material. During the charging process, lithium ions are de-intercalated from the positive active material and undergoes an alloying reaction with the metal or metal alloy or their composite material which acts as both negative electrode and negative current collector to form a lithium-metal alloy; during the discharging process, the lithium ions are de-intercalated from the lithium-metal alloy on the negative electrode and then intercalated into the positive active material so that the charging and discharging process is achieved. The main difference between the conventional lithium ion battery (i.e., comparative example) and the battery provided in the present application lies in the reactions that occur at the negative electrodes are different, namely, the reaction occurring in the conventional lithium ion battery is an intercalation-de-intercalation reaction of lithium ions, while the negative electrode of the secondary battery of the present disclosure undergoes alloying-dealloying reactions of lithium ions.

The battery provided in the embodiment of the present disclosure does not need conventional negative active material, so that the volume and the cost are reduced; meanwhile, the alloying reaction of the metal with the lithium ions provides a higher battery capacity. The energy density of the battery is remarkably increased by decreasing the weight and volume of the battery and enhancing the battery capacity, and the production cost can be reduced and the production procedures are simplified.

Specifically, in the embodiment of the present disclosure, the positive active material includes, but is not limited to, one or several or a composite material of lithium cobalt oxide (LiCoO₂), lithium nickel oxide (LiNiO₂), lithium manganese oxide (LiMn₂O₄), lithium iron phosphate (LiFePO₄), lithium nickel cobalt oxide binary material (LiNi₁₋ₓCoₓO₂), a spinel structure (LiMn₂₋ₓMₓO₄, M = Ni, Co, Cr or so forth), lithium nickel cobalt manganese oxide ternary material [Li(Ni,Co,Mn)O₂], a layered lithium-rich high manganese material [Li₂MnO₃-Li(NiCoMn)O₂], Li₃M₂(PO₄)₃ (M=V, Fe, Ti, or so forth) of a NASCION (Na Super Ionic Conductor) structure, etc.

Specifically, in the embodiment of the present disclosure, the negative current collector includes, but is not limited to, one of, or an alloy or metal composite of any one of, aluminum, magnesium, lithium, vanadium, copper, iron, tin, zinc, nickel, titanium, and manganese.

Specifically, in the embodiment of the present disclosure, the positive current collector includes, but is not limited to, one of, or an alloy or metal composite of any one of, aluminum, magnesium, lithium, vanadium, copper, iron, tin, zinc, nickel, titanium, and manganese.

Preferably, in the embodiment of the present disclosure, the negative current collector is aluminum.

Preferably, in the embodiment of the present disclosure, the positive current collector is aluminum.

In the present embodiment of the present disclosure, the solvent in the electrolyte is not particularly limited as long as the solvent can dissociate the electrolyte salt into cations and anions, and the cations and anions can freely migrate. For example, the solvent in the embodiment of the present disclosure is an ester, sulfone, ether, or nitrile-based organic solvent or ionic liquid. The solvent includes, but is not limited to, one or more of propylene carbonate, ethylene carbonate, butylene carbonate, diethyl carbonate, dimethyl carbonate, dipropyl carbonate, ethyl methyl carbonate, methyl propyl carbonate, dibutyl carbonate, butyl methyl carbonate, methyl isopropyl carbonate, methyl ester, methyl formate, methyl acetate, *N,N*-dimethylacetamide, fluoroethylene carbonate, methyl propionate, ethyl propionate, ethyl acetate, γ-butyrolactone, tetrahydrofuran, 2-methyltetrahydrofuran, 1,3-dioxolane, 4-methyl-1,3-dioxolane, dimethoxymethane, 1,2-dimethoxy ethane, 1,2-dimethoxy propane, triethylene glycol dimethyl ether, dimethyl sulfone, dimethyl ether, ethylene sulfite, propylene sulfite, dimethyl sulfite, diethyl sulfite, and crown ether.

Further, in order to prevent damage of the negative current collector caused by the volume change during charging and discharging so that the structure and function of the negative current collector are stabilized and the service life and performance of the negative current collector are improved so as to improve the cycle efficiency of the secondary battery, the electrolyte in the embodiment of the present disclosure also comprises an additive, including, but not limited to, one or several of fluoroethylene carbonate, vinylene carbonate, vinyl ethylene carbonate, 1,3-propanesultone, 1,4-butanesultone, ethylene sulfate, propylene sulfate, vinylene sulfate, ethylene sulfite, propylene sulfite, dimethylsulfite, diethylsulfite, vinylene sulfite, methyl chloroformate, dimethyl sulfoxide, anisole, acetamide, diazine, pyrimidine, crown ether/12-crown-4, crown ether/18-crown-6, 4-fluoroanisole, fluorinated noncyclic ether, difluoromethyl ethylene carbonate, trifluoromethyl ethylene carbonate, chloroethylene carbonate, bromoethylene carbonate, trifluoromethyl phosphonic acid, bromobutyrolactone, ethyl fluoroacetate, phosphate, phosphite, phosphazene, ethanolamine, carbodiimide, cyclobutyl sulfone, 1,3-dioxolane, acetonitrile, a long-chain alkene, aluminum oxide, magnesium oxide, barium oxide, sodium carbonate, calcium carbonate, carbon dioxide, sulfur dioxide, and lithium carbonate. Moreover, the content of the additive is from 0.1 to 20 wt%, and further from 1 to 5 wt%. The additive added in the electrolyte can form a stable solid electrolyte salt membrane on the surface of the negative current collector, so that the negative current collector is not damaged when reacting as an active material and can maintain its function and shape and increase the number of times of cycles of the battery.

Preferably, the additive is vinylene carbonate in an amount of 5 wt%.

Further, the positive active material layer also comprises a conductive agent and a binder, the content of the positive active material is 60 to 95 wt%, the content of the conductive agent is 0.1 to 30 wt%, and the content of the binder is 0.1 to 10 wt%. Moreover, the conductive agent and the binder are not particularly limited, and those commonly used in the art are applicable. The conductive agent is one or more of conductive carbon black, Super P conductive carbon spheres, conductive graphite KS6, carbon nanotube, conductive carbon fiber, graphene, and reduced graphene oxide. The binder is one or more of polyvinylidene fluoride, polytetrafluoroethylene, polyvinyl alcohol, carboxymethyl cellulose, SBR rubber, and polyolefins.

Further, more preferably, the negative current collector is aluminum foil, or porous aluminum, or porous aluminum coated with carbon material, or a multilayered composite material of aluminum. The use of the porous aluminum foil results in a more sufficient alloying reaction between the lithium ions de-intercalated from the positive active material with the aluminum metal to enhance the capacity of the battery; the use of the porous aluminum structure coated with carbon material is advantageous to maintaining the structural stability of aluminum due to the protection effect of the coated carbon layer to further improve the cycle stability of the battery, while enhancing the capacity of the battery; and the use of the multilayered composite material of aluminum is also advantageous to the inhibition and amelioration of the volume expansion effect of the aluminum foil to improve the cycle performance of the battery.

Specifically, the component of the separator used in the secondary battery provided in the embodiment of the present disclosure is an insulating, porous polymer film or inorganic porous film, including one or more of a porous polypropylene film, a porous polyethylene film, a porous composite polymer film, a glass fiber-based film, or a porous ceramic separator. The function of the separator is to physically insulate the positive and negative electrodes of the battery to prevent short circuit while allowing ions in the electrolyte to pass freely there through.

In a second aspect, an embodiment of the present disclosure also provides a method for preparing the secondary battery described above, comprising:
Step 101 of preparing a battery negative electrode, wherein a metal or a metal alloy or a metal composite conductive material is cut into a desired size, then a surface of the cut metal conductive material is washed, the washed metal conductive material is used as a negative current collector, and the negative current collector is used as the battery negative electrode;
Step 102 of preparing an electrolyte, wherein a certain amount of electrolyte salt is weighed out, added to a corresponding solvent, and fully stirred and dissolved;
Step 103 of preparing a separator, wherein a porous polymer film, an inorganic porous film or a glass fiber-based film is cut into a desired size and washed clean;
Step 104 of preparing a battery positive electrode, wherein a positive active material, a conductive agent and a binder are weighed out in a certain ratio, added to a suitable solvent and sufficiently grinded into a uniform slurry to form a positive active material layer; a metal or a metal alloy or a metal composite conductive material is used as a positive current collector with its surface washed; and then the positive active material positive active material layer is uniformly applied to the surface of the positive current collector, and after the positive active material layer is completely dried, the positive current collector with the positive active material layer is cut to provide the battery positive electrode with a desired size;
Step 105 of assembling with the battery negative electrode, the electrolyte, the separator, and the battery positive electrode.

Specifically, in the embodiment of the present disclosure, the metal conductive material in the Step 101 is one of aluminum, magnesium, lithium, vanadium, copper, iron, tin, zinc, nickel, titanium, and manganese, or an alloy of any one thereof, or a composite of any one thereof.

In the embodiment of the present disclosure, the electrolyte salt in the Step 102 is a lithium salt, and the solvent includes an ester, sulfone, ether, or nitrile-based organic solvent. The preparation of the electrolyte also comprises: adding an additive to the solvent and stirring the same. Preferably, the solvent includes, but is not limited to, one or more of ethylene carbonate, diethyl carbonate, dimethyl carbonate, and ethyl methyl carbonate; the additive is one or several of vinylene carbonate, ethylene sulfite, propylene sulfite, ethylene sulfate, cyclobutyl sulfone, 1 ,3-dioxolane, acetonitrile, or a long-chain alkene.

Preferably, in the embodiment of the present disclosure, the positive active material in the Step 104 is selected from one or several of lithium cobalt oxide, lithium manganese oxide, lithium titanate, lithium nickel cobalt manganese oxide, or lithium iron phosphate. The metal conductive material includes, but is not limited to, one of aluminum, magnesium, lithium, vanadium, copper, iron, tin, zinc, nickel, titanium, and manganese, or an alloy of any one thereof, or a composite of any one thereof.

Preferably, in the embodiment of the present disclosure, the Step 105 of assembling with the battery negative electrode, the electrolyte, the separator, and the battery positive electrode specifically comprises: stacking the prepared negative electrode, separator, and battery positive electrode closely successively under an inert gas or anhydrous and anaerobic condition, adding the electrolyte to completely impregnate the separator, and then packaging them into a battery case to complete the assembly of the battery.

It should be noted that although the operations of the preparation method of the present disclosure have been described in the above steps 101-104 in a specific order, this does not require or imply that these operations must be performed in the specific order. The preparations in the steps 101-104 can be performed simultaneously or in any sequence.

The method for preparing a secondary battery is based on the same inventive concept with the secondary battery described previously, and a secondary battery obtained by the method for preparing a secondary battery has all the effects of the secondary battery described previously and therefore will not be described in detail here.

The above-mentioned method for preparing a secondary battery will be further described below by way of specific examples. However, it should be understood that these examples are only used for a more detailed description, and should not be construed as limiting the present disclosure in any way.

### Example 1

Preparation of negative electrode of a battery: an aluminum foil with a thickness of 0.02 mm was taken, cut into a disc with a diameter of 12 mm, washed with ethyl alcohol, and dried by airing so as to be used as a negative current collector.

Preparation of a separator: a glass fiber paper was cut into a disc with a diameter of 16 mm, and dried by baking so as to be used as a separator.

Preparation of an electrolyte: 1.5 g of lithium hexafluorophosphate (at a concentration of 1 mol/L) was weighed out and added to a mixed solvent composed of 3.2 mL of ethylene carbonate, 3.2 mL of dimethyl carbonate and 3.2 mL of ethyl methyl carbonate, to which 5% by weight of vinylene carbonate (0.545 g) was added as an additive, and was stirred sufficiently until the lithium hexafluorophosphate was completely dissolved so as to be used as an electrolyte.

Preparation of positive electrode of a battery: 0.4 g of lithium cobalt oxide, 0.05 g of carbon black, and 0.05 g of polyvinylidene fluoride were added to 2 mL of a *N-*methylpyrrolidone solution, and grinded sufficiently to provide a uniform slurry; and then the slurry was uniformly applied to the surface of an aluminum foil and dried in vacuum. The dried electrode sheet was cut into a disc with a diameter of 10 mm, and compacted so as to be used as a positive electrode.

The assembly of a battery: in a glove box under the protection of inert gas, the above prepared negative current collector, separator and battery positive electrode were stacked closely in this order, to which the electrolyte was added dropwise to completely impregnate the separator, and then the above stacked parts were packaged in a button battery case to complete the assembly of the battery.

### Comparative Example

Preparation of negative electrode of a battery: 0.4 g of graphite, 0.05 g of carbon black, and 0.05 g of polyvinylidene fluoride were added to 2 mL of a N-methylpyrrolidone solution, and grinded sufficiently to provide a uniform slurry; and then the slurry was uniformly applied to the surface of an aluminum foil and dried in vacuum. The dried electrode sheet was cut into a disc with a diameter of 10 mm, and compacted so as to be used as a negative electrode.

Preparation of a separator: polymeric polyethylene was cut into a disc with a diameter of 16 mm, and dried by baking so as to be used as a separator.

Preparation of an electrolyte: 0.75 g of lithium hexafluorophosphate was weighed out and added to 2.5 mL of ethylene carbonate and 2.5 mL of dimethyl carbonate, and was stirred sufficiently until the lithium hexafluorophosphate was completely dissolved so as to be used as an electrolyte.

Preparation of positive electrode of a battery: 0.4 g of lithium cobalt oxide as a positive electrode material, 0.05 g of carbon black, and 0.05 g of polyvinylidene fluoride were added to 2 mL of a *N-*methylpyrrolidone solution, and grinded sufficiently to provide a uniform slurry; and then the slurry was uniformly applied to the surface of an aluminum foil and dried in vacuum. The dried electrode sheet was cut into a disc with a diameter of 10 mm, and compacted so as to be used as a battery positive electrode.

The assembly of a battery: in a glove box under the protection of inert gas, the above prepared negative current collector, separator and battery positive electrode were stacked closely successively, to which the electrolyte was added dropwise to completely impregnate the separator, and then the above stacked parts were packaged in a button battery case to complete the assembly of the battery.

### Battery Performance Testing

Charging-discharging Test: the secondary battery prepared in the embodiment of the above method for preparing a secondary battery was charged with a constant current of 100 mA/g of the positive active material until its voltage reached 4.2 V, and then discharged at the same current until its voltage reached 3 V, its battery capacity and energy density were measured, and its cycle stability was tested and expressed by the number of cycles, which refers to the number of times of charges and discharges of the battery when the battery capacity decays to 85%.

The electrochemical performance of the secondary battery provided in Example 1 of the present disclosure was tested, and compared with the performance of the conventional lithium ion battery mentioned in the Background Art, and the results and comparison were shown in Table 1.

**Table 1. Comparison of Electrochemical Performance Parameters of Example 1 and the Conventional Lithium Ion Battery in the Background Art**

| No. | Positive current collector | Positive active material | Negative current collector | Negative active material | Electrolyte | | | Electrochemical Performance | | Cost | Working Mechanism |
|---|---|---|---|---|---|---|---|---|---|---|---|
| | | | | | Electrolyte salt | Solvent | Concentration | Working Voltage (V) | Energy Density (Wh/kg) | | |
| Example 1 | Al foil | lithium cobalt oxide | Al foil (acting as both the current collector and the negative active material) | | LiPF₆ | ethylene carbonate + dimethyl carbonate + ethyl methyl carbonate (1:1:1) + 5% vinylene carbonate as an additive | 1 M | 3.6 V | 263 | low | Negative electrode: Al + Li⁺+e⁻↔AlLi; |
| | | | | | | | | | | | Positive electrode: LiCoO₂ ↔ Li₁₋ₓCoO₂ + xLi⁺+ xe⁻ |
| convention al lithium ion battery | Al foil | lithium containing compound | Al foil | graphite | LiPF₆ | ethylene carbonate : ethyl methyl carbonate : dimethyl carbonate =1:1:1 | 1 M | 3.7 V | 170 | high | Negative electrode: 6C+ Li⁺+ e⁻ 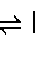 LiC₆; |
| | | | | | | | | | | | Positive electrode: 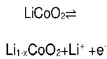 |

As can be seen from Table 1, the secondary battery of Example 1 of the present disclosure contains no graphite in the negative electrode, has reduced raw material cost and process cost, and has a further increased energy density, as compared with the conventional lithium ion battery.

### Examples 2-18

Examples 2-18 are the same as Example 1 in the steps of the process for preparing a secondary battery, except that the material selected for the negative current collector is different. See Table 2 for details.

**Table 2. Comparison of Performance of Batteries with Different Negative Current Collectors**

| No. | Negative current collector | Electrochemical Performance | | |
|---|---|---|---|---|
| | | Specific Capacity (mAh/g) | Number of times of cycles (times) when the capacity decays to 90% | Energy Density (Wh/kg) |
| Example 1 | aluminum foil | 170 | 250 | 263 |
| Example 2 | magnesium foil | 150 | 30 | 232 |
| Example 3 | lithium foil | 170 | 250 | 263 |
| Example 4 | vanadium foil | 140 | 50 | 217 |
| Example 5 | copper foil | 120 | 100 | 186 |
| Example 6 | iron foil | 120 | 100 | 186 |
| Example 7 | tin foil | 150 | 150 | 232 |
| Example 8 | zinc foil | 170 | 200 | 263 |
| Example 9 | nickel foil | 140 | 150 | 217 |
| Example 10 | titanium foil | 150 | 200 | 232 |
| Example 11 | manganese foil | 120 | 150 | 186 |
| Example 12 | aluminum-tin alloy | 170 | 220 | 263 |
| Example 13 | aluminum-titanium alloy | 170 | 220 | 263 |
| Example 14 | iron-tin alloy | 140 | 180 | 217 |
| Example 15 | porous aluminum | 170 | 150 | 263 |
| Example 16 | porous aluminum @ C | 170 | 500 | 263 |
| Example 17 | porous aluminum @ graphene | 170 | 500 | 263 |
| Example 18 | multilayered aluminum composite material | 170 | 500 | 263 |

As can be seen from Table 2, when aluminum foil and the related composite materials thereof are selected as the negative current collector, the battery has a higher specific capacity, better cycle performance, higher energy density, and lower cost.

### Examples 19-29

Examples 19-29 are the same as Example 1 in the steps of the process for preparing a secondary battery, except that the material selected for the positive active material is different. See Table 3 for details.

**Table 3. Comparison of Performance of Batteries with Different Positive Active Materials**

| No. | Positive active material | Electrochemical Performance | | |
|---|---|---|---|---|
| | | Specific Capacity (mAh/g) | Number of times of cycles (times) when the capacity decays to 90% | Energy Density (Wh/kg) |
| Example 1 | lithium cobalt oxide | 170 | 250 | 263 |
| Example 19 | lithium nickel oxide | 150 | 250 | 232 |
| Example 20 | layered lithium manganese oxide | 120 | 250 | 186 |
| Example 21 | lithium iron phosphate | 120 | 500 | 186 |
| Example 22 | Spinel-type lithium manganese oxide | 100 | 200 | 155 |
| Example 23 | lithium nickel cobalt oxide binary material | 150 | 250 | 232 |
| Example 24 | lithium nickel cobalt manganese oxide ternary material | 170 | 250 | 263 |
| Example 25 | layered lithium-rich high manganese material | 250 | 250 | 387 |
| Example 26 | lithium cobalt oxide + lithium iron phosphate | 150 | 300 | 232 |
| Example 27 | lithium manganese oxide + lithium nickel cobalt manganese oxide ternary material | 150 | 250 | 232 |
| Example 28 | lithium cobalt oxide @ graphene | 170 | 400 | 263 |
| Example 29 | lithium iron phosphate @ C | 120 | 700 | 186 |

### Examples 30-45

Examples 30-45 are the same as Example 1 in the steps of the process for preparing a secondary battery, except that the electrolyte salt is different. See Table 4 for details.

**Table 4. Comparison of Performance of Batteries with Different Electrolyte Salts**

| No. | Electrolyte Salt | Electrochemical Performance | | |
|---|---|---|---|---|
| | | Specific Capacity (mAh/g) | Number of times of cycles (times) when the capacity decays to 90% | Energy Density (Wh/kg) |
| Example 1 | lithium hexafluorophosphate | 170 | 250 | 263 |
| Example 30 | lithium perchlorate | 160 | 240 | 248 |
| Example 31 | lithium acetate | 100 | 150 | 155 |
| Example 32 | lithium tetrafluoroborate | 150 | 220 | 232 |
| Example 33 | lithium salicylate | 100 | 100 | 155 |
| Example 34 | lithium acetoacetate | 80 | 120 | 124 |
| Example 35 | lithium carbonate | 80 | 120 | 124 |
| Example 36 | lithium trifluoromethanesulfonate | 120 | 150 | 186 |
| Example 37 | lithium citrate | 80 | 150 | 124 |
| Example 38 | lithium lauryl sulfate | 130 | 180 | 201 |
| Example 39 | lithium bis(trimethylsilyl)amide | 150 | 180 | 232 |
| Example 40 | lithium hexafluoroarsenate | 140 | 200 | 217 |
| Example 41 | lithium bis(trifluoromethanesulfonyl)imide | 160 | 150 | 248 |
| Example 42 | lithium hexafluorophosphate + lithium carbonate | 160 | 300 | 248 |
| Example 43 | lithium tetrafluoroborate + lithium citrate | 140 | 180 | 217 |
| Example 44 | lithium trifluoromethanesulfonate + lithium bis(trimethylsilyl)amide | 140 | 250 | 217 |
| Example 45 | lithium hexafluorophosphate + lithium perchlorate + lithium tetrafluoroborate | 140 | 200 | 217 |

As can be seen from Table 4, when the electrolyte salt is LiPF₆, the battery has higher specific capacity, better cycle stability, and higher energy density.

### Example 46-50

Examples 46-50 are the same as Example 1 in the steps of the process for preparing a secondary battery, except that the concentration of the electrolyte salt is different. See Table 5 for details.

**Table 5. Comparison of Performance of Batteries with Different Electrolyte Salt Concentrations**

| No. | Electrolyte Salt Concentration | Electrochemical Performance | | |
|---|---|---|---|---|
| | | Specific Capacity (mAh/g) | Number of times of cycles (times) when the capacity decays to 90% | Energy Density (Wh/kg) |
| Example 46 | 0.1 M | 120 | 250 | 186 |
| Example 47 | 0.5 M | 140 | 250 | 217 |
| Example 1 | 1 M | 170 | 250 | 263 |
| Example 48 | 2 M | 170 | 180 | 263 |
| Example 49 | 3M | 170 | 100 | 263 |
| Example 50 | 4M | 170 | 50 | 263 |

As can be seen from Table 5, when the concentration of the electrolyte salt is 1 M (mol/L), the specific capacity, energy density and cycle performance of the battery are all higher.

### Examples 51-94

Examples 51-94 are the same as Example 1 in the steps of the process for preparing a secondary battery, except that the type of the solvent in the electrolyte is different. See Table 6 for details.

**Table 6. Comparison of Performance of Batteries with Different Solvents in the Electrolytes**

| No. | Solvent of the electrolyte | Electrochemical Performance | |
|---|---|---|---|
| | | Number of times of cycles (times) when the capacity decays to 90% | Energy Density (Wh/kg) |
| Example 51 | propylene carbonate | 100 | 100 |
| Example 52 | ethylene carbonate | 50 | 60 |
| Example 53 | diethyl carbonate | 150 | 140 |
| Example 54 | dimethyl carbonate | 150 | 140 |
| Example 55 | ethyl methyl carbonate | 150 | 140 |
| Example 56 | methyl formate | 100 | 60 |
| Example 57 | methyl acetate | 100 | 80 |
| Example 58 | *N,N*-dimethylacetamide (DMA) | 120 | 50 |
| Example 59 | fluoroethylene carbonate (FEC) | 150 | 120 |
| Example 60 | methyl propionate (MP) | 100 | 80 |
| Example 61 | ethyl propionate (EP) | 100 | 80 |
| Example 62 | ethyl acetate (EA) | 100 | 80 |
| Example 63 | γ-butyrolactone (GBL) | 80 | 60 |
| Example 64 | tetrahydrofuran (THF) | 50 | 120 |
| Example 65 | triethylene glycol dimethyl ether (DG) | 80 | 140 |
| Example 66 | propylene sulfite (PS) | 100 | 160 |
| Example 67 | dimethyl sulfone (MSM) | 80 | 150 |
| Example 68 | dimethyl ether (DME) | 50 | 100 |
| Example 69 | ethylene sulfite (ES) | 60 | 160 |
| Example 70 | dipropyl carbonate | 150 | 140 |
| Example 71 | butylene carbonate | 150 | 140 |
| Example 72 | methyl propyl carbonate | 180 | 140 |
| Example 73 | dibutyl carbonate | 180 | 140 |
| Example 74 | methyl butyl carbonate | 160 | 140 |
| Example 75 | methyl isopropyl carbonate | 120 | 120 |
| Example 76 | methyl ester | 80 | 100 |
| Example 77 | 2-methyltetrahydrofuran | 60 | 80 |
| Example 78 | 1,3-dioxolane | 60 | 60 |
| Example 79 | 4-methyl-1,3-dioxolane | 50 | 60 |
| Example 80 | dimethoxymethane | 50 | 80 |
| Example 81 | 1,2-dimethoxypropane | 80 | 80 |
| Example 82 | dimethyl sulfite | 120 | 140 |
| Example 83 | diethyl sulfite | 120 | 140 |
| Example 84 | crown ether | 80 | 80 |
| Example 85 | dimethoxymethane + 1 ,2-dimethoxypropane (v/v 1:1) | 50 | 80 |
| Example 86 | methyl isopropyl carbonate + methyl butyl carbonate (v/v 1:1) | 100 | 140 |
| Example 87 | ethylene carbonate + propylene carbonate (v/v 1:1) | 180 | 200 |
| Example 88 | ethylene carbonate + ethyl methyl carbonate (v/v 1:1) | 200 | 240 |
| Example 89 | ethylene carbonate + dimethyl carbonate (v/v 1:1) | 200 | 240 |
| Example 90 | ethylene carbonate + dimethyl ether (v/v 1:1) | 160 | 180 |
| Example 91 | ethylene carbonate + dimethylsulfoxide (v/v 1:1) | 150 | 180 |
| Example 92 | triethylene glycol dimethyl ether + sulfolane (v/v 1:1) | 100 | 80 |
| Example 93 | ethylene carbonate + ethyl methyl carbonate + propylene carbonate (v/v/v 1:1:1) | 220 | 240 |
| Example 94 | ethyl methyl carbonate + tetrahydrofuran + dimethoxymethane + 1 ,2-dimethoxypropane (v/v/v 1:1:1) | 150 | 180 |
| Example 1 | ethylene carbonate + ethyl methyl carbonate + dimethyl carbonate (v/v/v 1:1:1) | 250 | 263 |

### Examples 95-145

Examples 95-145 are the same as Example 1 in the steps of the process for preparing a secondary battery, except that the type of the additive in the electrolyte is different. See Table 7 for details.

**Table 7. Comparison of Performance of Batteries with Different Additives in the Electrolytes**

| No. | Additive in the Electrolyte | Electrochemical Performance | |
|---|---|---|---|
| | | Number of times of cycles (times) when the capacity decays to 90% | Energy Density (Wh/kg) |
| Example 1 | vinylene carbonate (5 wt%) | 250 | 263 |
| Example 95 | vinylene sulfite (5 wt%) | 220 | 263 |
| Example 96 | propylene sulfite (5 wt%) | 200 | 256 |
| Example 97 | ethylene sulfate (5 wt%) | 220 | 240 |
| Example 98 | ethylene sulfite (5 wt%) | 230 | 240 |
| Example 99 | acetonitrile (5 wt%) | 200 | 240 |
| Example 100 | long-chain alkene (5 wt%) | 180 | 240 |
| Example 101 | vinyl ethylene carbonate (5 wt%) | 220 | 240 |
| Example 102 | 1 ,3-propanesultone (5 wt%) | 160 | 240 |
| Example 103 | 1 ,4-butanesultone (5 wt%) | 160 | 245 |
| Example 104 | propylene sulfate (5 wt%) | 220 | 256 |
| Example 105 | 1 ,3-dioxolane (5 wt%) | 160 | 213 |
| Example 106 | dimethylsulfite (5 wt%) | 200 | 240 |
| Example 107 | diethylsulfite (5 wt%) | 200 | 240 |
| Example 108 | methyl chloroformate (5 wt%) | 180 | 235 |
| Example 109 | dimethyl sulfoxide (5 wt%) | 180 | 230 |
| Example 110 | anisole (5 wt%) | 160 | 230 |
| Example 111 | acetamide (5 wt%) | 160 | 230 |
| Example 112 | diazine (5 wt%) | 140 | 205 |
| Example 113 | pyrimidine (5 wt%) | 140 | 230 |
| Example 114 | crown ether/12-crown-4 (5 wt%) | 140 | 220 |
| Example 115 | crown ether/18-crown-6 (5 wt%) | 140 | 220 |
| Example 116 | 4-fluoroanisole (5 wt%) | 160 | 260 |
| Example 117 | fluorinated noncyclic ether (5 wt%) | 140 | 230 |
| Example 118 | difluoromethyl ethylene carbonate (5 wt%) | 140 | 230 |
| Example 119 | trifluoromethyl ethylene carbonate (5 wt%) | 140 | 240 |
| Example 120 | chloroethylene carbonate (5 wt%) | 140 | 240 |
| Example 121 | bromoethylene carbonate (5 wt%) | 140 | 240 |
| Example 122 | trifluoromethyl phosphonic acid (5 wt%) | 150 | 240 |
| Example 123 | bromobutyrolactone (5 wt%) | 150 | 230 |
| Example 124 | fluoroacetoxyethane (5 wt%) | 180 | 230 |
| Example 125 | phosphate (5 wt%) | 150 | 220 |
| Example 126 | phosphite (5 wt%) | 150 | 220 |
| Example 127 | phosphazene (5 wt%) | 200 | 220 |
| Example 128 | ethanolamine (5 wt%) | 200 | 230 |
| Example 129 | carbodiimide (5 wt%) | 180 | 225 |
| Example 130 | cyclobutyl sulfone (5 wt%) | 220 | 230 |
| Example 131 | aluminum oxide (5 wt%) | 200 | 240 |
| Example 132 | magnesium oxide (5 wt%) | 200 | 240 |
| Example 133 | barium oxide (5 wt%) | 200 | 240 |
| Example 134 | sodium carbonate (5 wt%) | 200 | 240 |
| Example 135 | calcium carbonate (5 wt%) | 200 | 256 |
| Example 136 | carbon dioxide (5 wt%) | 180 | 255 |
| Example 137 | sulfur dioxide (5 wt%) | 180 | 253 |
| Example 138 | lithium carbonate (5 wt%) | 240 | 253 |
| Example 139 | fluoroethylene carbonate (5 wt%) | 120 | 260 |
| Example 140 | vinylene carbonate (2.5 wt%)+ vinylene sulfite (2.5 wt%) | 160 | 260 |
| Example 141 | ethanolamine (2.5 wt%) + vinyl ethylene carbonate (2.5 wt%) | 150 | 240 |
| Example 142 | dimethylsulfoxide (2.5 wt%) + diazine (2.5 wt%) | 150 | 225 |
| Example 143 | propylene sulfite (2.5 wt%) + aluminum oxide (2.5 wt%) | 180 | 240 |
| Example 144 | lithium carbonate (2.5 wt%) + barium carbonate (2.5 wt%) | 220 | 256 |

### Examples 145-151

Examples 145-151 are the same as Example 1 in the steps of the process for preparing a secondary battery, except that the content of the additive in the electrolyte is different. See Table 8 for details.

**Table 8. Comparison of Performance of Batteries with Different Amounts of Additives**

| No. | Content of the Additive in the electrolyte | Electrochemical Performance | |
|---|---|---|---|
| | | Number of times of cycles (times) when the capacity decays to 90% | Energy Density (Wh/kg) |
| Example 145 | 0.1 wt% | 50 | 300 |
| Example 146 | 1 wt% | 120 | 250 |
| Example 147 | 2 wt % | 200 | 255 |
| Example 148 | 3 wt% | 220 | 263 |
| Example 149 | 5 wt % | 250 | 263 |
| Example 1 | 10 wt% | 180 | 263 |
| Example 150 | 15 wt% | 100 | 255 |
| Example 151 | 20 wt% | 50 | 250 |

As can be seen from Table 8, the cycle stability of the battery is best when the content of the additive is 5 wt%.

### Examples 152-153

Examples 152-153 are the same as Example 1 in the steps of the process for preparing a secondary battery, except that the type of the separator is different. See Table 9 for details.

**Table 9. Comparison of Performance of Batteries with Different Separators**

| No. | Separator | Electrochemical Performance | |
|---|---|---|---|
| | | Number of times of cycles (times) when the capacity decays to 90% | Energy Density (Wh/kg) |
| Example 1 | glass fiber paper | 250 | 263 |
| Example 152 | porous polymer separator | 250 | 263 |
| Example 153 | inorganic porous film | 250 | 263 |

It can be seen from Table 9 that the conventional separators can be selected and used as the separator, all of which enable the secondary battery of the present disclosure to obtain better cycle performance and higher energy density.

### Examples 154-159

Examples 154-159 are the same as Example 1 in the steps of the process for preparing a secondary battery, except that the active material, the conductive agent, and the binder in the positive electrode material are different in type and percentage by weight. See Table 10 for details.

**Table 10. Comparison of Performance of Batteries with Different Amounts of Positive Active Materials, Conductive Agents, and Binders**

| No. | Positive Electrode Material | | | Electrochemical Performance | |
|---|---|---|---|---|---|
| | Active Material (percentage by weight) | Conductive Agent (percentage by weight) | Binder (percentage by weight) | Number of times of cycles (times) when the capacity decays to 90% | Energy Density (Wh/kg) |
| Example 1 | lithium cobalt oxide (80%) | acetylene black (10%) | polyvinylidene fluoride (10%) | 250 | 263 |
| Example 154 | lithium cobalt oxide (90%) | conductive carbon spheres (0.1%) | polytetrafluoroethylene (9.9%) | 220 | 250 |
| Example 155 | lithium cobalt oxide (60%) | conductive graphite (30%) | polyvinyl alcohol (10%) | 220 | 250 |
| Example 156 | lithium cobalt oxide (90%) | carbon nanotube (9.9%) | polypropylene (0.1%) | 180 | 250 |
| Example 157 | lithium cobalt oxide (90%) | graphene (5%) | carboxymethyl cellulose + SBR (5%) | 200 | 260 |
| Example 158 | lithium cobalt oxide (90%) | conductive carbon fiber (5%) | polyvinylidene fluoride (5%) | 200 | 260 |
| Example 159 | lithium cobalt oxide (90%) | acetylene black + carbon nanotube (5%) | polyvinylidene fluoride (5%) | 200 | 260 |

### Examples 160-172

Examples 160-172 are the same as Example 1 in the steps of the process for preparing a secondary battery, except that the type of the positive current collector is different. See Table 11 for details.

**Table 11. Comparison of Performance of Batteries with Different Positive Current Collectors**

| No. | Positive current collector | Electrochemical Performance | | |
|---|---|---|---|---|
| | | Specific Capacity (mAh/g) | Number of times of cycles (times) when the capacity decays to 90% | Energy Density (Wh/kg) |
| Example 1 | aluminum foil | 170 | 250 | 263 |
| Example 160 | magnesium foil | 170 | 250 | 263 |
| Example 161 | lithium foil | 170 | 250 | 263 |
| Example 162 | vanadium foil | 170 | 250 | 263 |
| Example 163 | copper foil | 170 | 250 | 263 |
| Example 164 | iron foil | 170 | 250 | 263 |
| Example 165 | tin foil | 170 | 250 | 263 |
| Example 166 | zinc foil | 170 | 250 | 263 |
| Example 167 | nickel foil | 170 | 250 | 263 |
| Example 168 | titanium foil | 170 | 250 | 263 |
| Example 169 | manganese foil | 170 | 250 | 263 |
| Example 170 | copper-zinc alloy | 170 | 250 | 263 |
| Example 171 | tin-iron alloy | 170 | 250 | 263 |
| Example 172 | nickel-zinc alloy | 170 | 250 | 263 |

## Claims

1. A secondary battery comprising a battery negative electrode, an electrolyte, a separator, and a battery positive electrode, **characterized in that**
the negative electrode of the battery comprises a negative current collector; the negative current collector comprises a metal or a metal alloy or a metal composite conductive material, and the negative current collector also acts as a negative active material, the negative current collector being porous aluminum wrapped in a carbon material;
the electrolyte comprises an electrolyte salt, a solvent and an additive, and the electrolyte salt is a lithium salt, the additive includes one or several of ester, sulfone, ether, nitrile or alkene organic additives;
the positive electrode of the battery comprises a positive current collector and a positive active material layer, the positive active material layer comprises a positive active material capable of reversibly de-intercalating and intercalating lithium ions, and the positive current collector comprises a metal or a metal alloy or a metal composite conductive material.

2. The secondary battery according to claim 1, **characterized in that** positive current collector includes any one of aluminum, magnesium, lithium, vanadium, copper, iron, tin, zinc, nickel, titanium and manganese, or a composite of any one thereof, or an alloy of any one thereof.

3. The secondary battery according to claim 1, **characterized in that** the positive active material includes one or several selected from the group consisting of lithium cobalt oxide, lithium nickel oxide, lithium manganese oxide, lithium iron phosphate, lithium nickel cobalt oxide binary material, spinel-structured oxide, lithium nickel cobalt manganese oxide ternary material, and a layered lithium-rich high-manganese material, or a composite material of one selected from the group.

4. The secondary battery according to claim 1, **characterized in that** the electrolyte salt includes one or several of lithium hexafluorophosphate, lithium perchlorate, lithium tetrafluoroborate, lithium acetate, lithium salicylate, lithium acetoacetate, lithium carbonate, lithium trifluoromethanesulfonate, lithium lauryl sulfate, lithium citrate, lithium bis(trimethylsilyl)amide, lithium hexafluoroarsenate, and lithium bis(trifluoromethanesulfonyl)imide, and has a concentration ranging from 0.1 to 10 mol/L, preferably from 0.5 to 2 mol/L.

5. The secondary battery according to claim 3, **characterized in that** the electrolyte salt is lithium hexafluorophosphate at a concentration of 1 mol/L.

6. The secondary battery according to claim 1, **characterized in that** the solvent includes one or more of ester, sulfone, ether, and nitrile organic solvents, and ionic liquids.

7. The secondary battery according to claim 1, **characterized in that** the solvent is ethylene carbonate, ethyl methyl carbonate, and dimethyl carbonate in a volume ratio of 1:1:1.

8. The secondary battery according to claim 1, **characterized in that** the solvent is ethylene carbonate and ethyl methyl carbonate in a volume ratio of 1:1.

9. The secondary battery according to claim 1, **characterized in that** the additive includes one or more of fluoroethylene carbonate, vinylene carbonate, vinyl ethylene carbonate, 1,3-propanesultone, 1,4-butanesultone, ethylene sulfate, propylene sulfate, vinylene sulfate, ethylene sulfite, propylene sulfite, dimethylsulfite, diethylsulfite, vinylene sulfite, methyl chloroformate, dimethyl sulfoxide, anisole, acetamide, diazine, pyrimidine, crown ether/12-crown-4, crown ether/18-crown-6, 4-fluoroanisole, fluorinated noncyclic ether, difluoromethyl ethylene carbonate, trifluoromethyl ethylene carbonate, chloroethylene carbonate, bromoethylene carbonate, trifluoromethyl phosphonic acid, bromobutyrolactone, ethyl fluoroacetate, phosphate, phosphite, phosphazene, ethanolamine, carbodiimide, cyclobutyl sulfone, 1,3-dioxolane, acetonitrile, long-chain alkene, aluminum oxide, magnesium oxide, barium oxide, sodium carbonate, calcium carbonate, carbon dioxide, sulfur dioxide, and lithium carbonate, and in the electrolyte, the content of the additive is 0.1 to 20 wt% by weight.

10. The secondary battery according to claim 1, **characterized in that** the additive is vinylene carbonate, and wherein a content of the additive in the electrolyte is 5 wt% by weight.

11. The secondary battery according to claim 9, **characterized in that** in the electrolyte, the additive is vinylene carbonate, ethylene sulfite, propylene sulfite or vinylene sulfite, and the content of the additive is 1 to 5 wt% by weight.

12. The secondary battery according to claim 1, **characterized in that** the positive active material layer further comprises a conductive agent and a binder, the content of the positive active material is 60 to 95 wt%, the content of the conductive agent is 0.1 to 30 wt%, and the content of the binder is 0.1 to 10 wt%.

13. The secondary battery according to claim 1, **characterized in that** the separator is an insulating porous polymer film or inorganic porous film, including one or more of a porous polypropylene film, a porous polyethylene film, a porous composite polymer film, a glass fiber-based film, and a porous ceramic separator.

14. A method for preparing the secondary battery according to any one of claims 1-13, **characterized by** comprising steps of:
preparing a negative electrode, wherein the porous aluminum wrapped in a carbon material is cut to be in a desired size, washed clean, and then used as a negative electrode, the porous aluminum wrapped in the carbon material acting as both a negative current collector and a negative active material simultaneously;
preparing an electrolyte, wherein a certain amount of a lithium salt and the additive is weighed and added to a corresponding solvent, fully stirred and dissolved to obtain an electrolyte;
preparing a separator, wherein a porous polymer film, an inorganic porous film or a glass fiber film is cut to be in a desired size and washed clean;
preparing a battery positive electrode, wherein a positive active material, a conductive agent and a binder are weighed in a certain ratio, added to a suitable solvent and sufficiently grinded into a uniform slurry; a metal or a metal alloy or a metal composite conductive material, after a surface thereof is washed clean, is used as a positive current collector; and then the slurry is uniformly applied to a surface of the positive current collector, and after the slurry is completely dried to form a positive active material layer, the positive current collector with the positive active material layer is cut to provide a battery positive electrode with a desired size; and
assembling the battery negative electrode, the electrolyte, the separator, and the battery positive electrode sequentially to provide a secondary battery.

15. A secondary battery comprising a battery negative electrode, an electrolyte, a separator, and a battery positive electrode, **characterized in that**
the negative electrode of the battery comprises a negative current collector; the negative current collector comprises a metal or a metal alloy or a metal composite conductive material, and the negative current collector also acts as a negative active material, the negative current collector being a multilayered composite material of aluminum;
the electrolyte comprises an electrolyte salt, a solvent and an additive, and the electrolyte salt is a lithium salt, the additive includes one or several of ester, sulfone, ether, nitrile or alkene organic additives;
the positive electrode of the battery comprises a positive current collector and a positive active material layer, the positive active material layer comprises a positive active material capable of reversibly de-intercalating and intercalating lithium ions, and the positive current collector comprises a metal or a metal alloy or a metal composite conductive material.

## Patentansprüche

1. Eine sekundäre Batterie, die eine negative Elektrode für Batterien, einen Elektrolyt, ein Trennteil und eine positive Elektrode für Batterien umfasst, **dadurch gekennzeichnet, dass**:
Die negative Elektrode der Batterie einen negativen Stromabnehmer umfasst; der negative Stromabnehmer ein Leitungsmaterial aus Metall, einer Metalllegierung oder einem Metallverbundwerkstoff umfasst und der negative Stromabnehmer auch als ein negatives, aktives Material fungiert, wobei der negative Stromabnehmer ein in einem Kohlenstoffmaterial eingehülltes, poröses Aluminium ist;
der Elektrolyt ein Elektrolytsalz, ein Lösemittel und ein Additiv umfasst und das Elektrolytsalz ein Lithiumsalz ist, das Additiv eine oder mehrere folgender Substanzen einschliesst: Ester, Sulfon, Ether, Nitril oder Alken organische Additive.
die positive Elektrode der Batterie einen positiven Stromabnehmer und eine positive, aktive Materialschicht umfasst, die positive, aktive Materialschicht ein positives aktives Material umfasst, das fähig ist, reversibel Lithiumionen zu deinterkalieren oder interkalieren, und der positive Stromabnehmer ein leitfähiges Material aus Metall oder einer Metalllegierung oder aus einer Metallzusammensetzung umfasst.

2. Die sekundäre Batterie gemäss Anspruch 1, **dadurch gekennzeichnet, dass** der positive Stromabnehmer eins folgender Elemente umfasst: Aluminium, Magnesium, Lithium, Vanadium, Kupfer, Eisen, Zinn, Zink, Nickel, Titan und Mangan oder eine Zusammensetzung irgendeines derselben, oder eine Legierung irgendeines derselben.

3. Die sekundäre Batterie gemäss Anspruch 1, **dadurch gekennzeichnet, dass** der positive aktive Material eins oder mehrere Materialien folgender Gruppe einschliesst: Lithium Kobaltoxid, Lithium Nickeloxid, Lithium Manganoxid, Lithium Eisen Phosphat, Binärmaterial aus Lithium-Nickel-Kobalt-Oxid, spinellstrukturiertes Oxid, ternäres Material aus Lithium-Nickel-Kobalt-ManganOxid und ein lithiumreiches, hoch manganhaltiges Schichtmaterial, oder ein Verbundmaterial eines der aus der Gruppe ausgewählten Materials.

4. Die sekundäre Batterie gemäss Anspruch 1, **dadurch gekennzeichnet, dass** das Elektrolytsalz eins oder mehrere folgender Materialien umfasst: Lithiumhexafluorphosphat, Lithiumperchlorate, Lithiumtetrafluorborat, Lithiumacetat, Lithiumsalicylat, Lithiumacetoacetat, Lithiumkarbonat, Lithiumtrifluormethansulfonat, Lithiumlaurylsulfat, Lithiumcitrat, Lithiumbis(trimethylsilyl)amid, Lithiumhexafluorarsenat und Lithiumbis(trifluormethansulfonyl)imid, und mit einer Konzentration von 0,1 bis 10 mol/l, vorzugsweise von 0,5 bis 2 mol/l.

5. Die sekundäre Batterie gemäss Anspruch 3, **dadurch gekennzeichnet, dass** das Elektrolytsalz Lithiumhexafluorphosphate mit einer Konzentration von 1 mol/l ist.

6. Die sekundäre Batterie gemäss Anspruch 1 **dadurch gekennzeichnet, dass** das Lösemittel eins oder mehrere folgender Materialien einschliesst: organische Lösemittel wie Ester, Sulfon, Ether und Nitril sowie ionische Flüssigkeiten.

7. Die sekundäre Batterie gemäss Anspruch 1 **dadurch gekennzeichnet, dass** das Lösemittel Ethylenkarbonat, Ethylmethylkarbonat und Dimethylkarbonat mit einem Volumenverhältnis von 1:1:1 ist.

8. Die sekundäre Batterie gemäss Anspruch 1 **dadurch gekennzeichnet, dass** das Lösemittel Ethylenkarbonat und Ethylmethylkarbonat mit einem Volumenverhältnis von 1:1 ist.

9. Die sekundäre Batterie gemäss Anspruch 1 **dadurch gekennzeichnet, dass** das Additiv eine oder mehrere folgender Substanzen einschliesst: Fluorethylencarbonat, Vinylencarbonat, Vinylethylencarbonat, 1,3-propansulton, 1,4-butansulton, Ethylensulfat, Propylensulfat, Vinylensulfat, Ethylensulfit, Propylensulfit, Dimethylsulfit, Diethylsulfit, Vinylensulfit, Methylchloroformiat, Dimethylsulfoxid, Anisol, Acetamid, Diazin, Pyrimidin, Kronenether/12-Krone-4, Kronenether/18-Krone-6, 4-Fluoranisol, fluorierter, nichtzyklischer Ether, Difluormethyl Ethylencarbonat, Trifluormethyl Ethylencarbonat, Chlorethylencarbonat, Bromethylencarbonat, Trifluormethyl Phosphonsäure, Brombutyrolacton, Ethyl Fluoracetat, Phosphat, Phosphit, Phosphazen, Ethanolamin, Carbodiimid, Cyclobutyl Sulfon, 1,3-Dioxolan, Acetonitril, langkettiges Alken, Aluminiumoxid, Magnesiumoxid, Bariumoxid, Natriumcarbonat, Kalziumcarbonat, Kohlendioxid, Schwefeldioxid und Lithiumcarbonat, und im Elektrolyt beträgt der Inhalt des Additivs 0,1 bis 20 Gew%.

10. Die sekundäre Batterie gemäss Anspruch 1 **dadurch gekennzeichnet, dass** das Additiv Vinylencarbonat ist, wobei der Inhalt des Additivs im Elektrolyt 5 Gew% beträgt.

11. Die sekundäre Batterie gemäss Anspruch 9 **dadurch gekennzeichnet, dass** im Elektrolyt das Additiv Vinylencarbonat, Ethylensulfit, Propylensulfit oder Vinylensulfit ist, und der Inhalt des Additivs von 1 bis 5 Gew.% beträgt.

12. Die sekundäre Batterie gemäss Anspruch 1 **dadurch gekennzeichnet, dass** die positive, aktive Materialschicht weiter ein leitfähiges Mittel und ein Bindemittel umfasst, wobei der Inhalt des positiven, aktiven Materials 60-95 Gew%, der Inhalt des leitfähigen Mittels 0,1 bis 30 Gew.% und der Inhalt des Bindemittels 0,1 bis 10 Gew.% beträgt.

13. Die sekundäre Batterie gemäss Anspruch 1 **dadurch gekennzeichnet, dass** das Trennteil ein isolierender, poröser Polymerfilm oder ein anorganischer, poröser Film ist, einschliesslich eines porösen oder mehrerer poröser Polypropylenfilme, eines porösen Polyethylenfilms, eines porösen Verbundpolymerfilms, eines Films basierend auf Glasfaser und eines porösen Keramik Trennteils.

14. Eine Methode für die Herstellung einer sekundären Batterie gemäss irgendeinem der Ansprüche 1-13 **gekennzeichnet dadurch, dass** sie folgende Schritte umfasst:
Bereiten einer negativen Elektrode, wobei das poröse, in Kohlenstoffmaterial eingehülltes Aluminium auf die gewünschte Grösse zugeschnitten, rein gewaschen und danach als negative Elektrode verwendet wird, wobei das im Kohlenstoffmaterial eingehüllte, poröse Aluminium sowohl als negativer Stromabnehmer als auch simultan als negative aktives Material wirkt;
Bereiten eines Elektrolyts, wobei eine gewisse Menge an Lithiumsalz und das Additiv gewogen und in ein entsprechendes Lösemittel hinzugegeben und zwecks Erhalt eines Elektrolyts komplett durchgerührt und aufgelöst wird;
Bereiten eines Trennteils, wobei ein poröser Polymerfilm, ein anorganischer, poröser Film oder ein Glasfaserfilm auf eine gewünschte Grösse zugeschnitten und reingewaschen wird;
Bereiten einer positiven Elektrode für Batterien, wobei ein positives, aktives Material, ein leitfähiges Mittel und ein Bindemittel in einem gewissen Verhältnis gewogen werden, zu einem passenden Lösemittel hinzugegeben und ausreichend zu einem einheitlichen Brei gemahlen werden; ein leitfähiges Material aus Metall oder einer Metalllegierung oder einem Metallverbund wird, nach Reinwaschen einer Oberfläche derselben, als positiver Stromabnehmer benutzt; wonach der Brei einheitlich auf eine Oberfläche des positiven Stromabnehmers aufgetragen wird, und nachdem der Brei vollständig getrocknet ist, um eine positiv aktive Materialschicht zu bilden, wird der positive Stromabnehmer mit der positiven aktiven Materialschicht geschnitten zwecks Erhalt einer positiven Elektrode für Batterien mit einer gewünschten Grösse; und
Sequenzieller Zusammenbau der negativen Elektrode für Batterien, des Elektrolyts, des Trennteils und der positiven Elektrode für Batterien zwecks Erhalt einer sekundären Batterie.

15. Eine sekundäre Batterie, die eine negative Elektrode für Batterien, ein Elektrolyt, ein Trennteil und eine positive Elektrode für Batterien umfasst, **dadurch gekennzeichnet, dass**
die negative Elektrode der Batterie einen negativen Stromabnehmer umfasst; wobei der negative Stromabnehmer ein leitfähiges Material aus Metal oder einer Metalllegierung oder einem Metallverbundwerkstoff umfasst und der negative Stromabnehmer auch als negativ aktives Material wirks, wobei der negative Stromabnehmer ein vielschichtiges Verbundmaterial aus Aluminium ist;
der Elektrolyt ein Elektrolytsalz, ein Lösemittel und ein Additiv umfasst, und das Elektrolytsalz ein Lithiumsalz ist, das Additiv eine oder mehrere folgender Substanzen einschliesst: Ester, Sulfon, Ether, Nitril oder alkenorganische Additive;
die positive Elektrode der Batterie einen positiven Stromabnehmer und eine positive, aktive Materialschicht umfasst, wobei die positive, aktive Materialschicht ein positiv aktives Material umfasst, das zu einer reversiblen de-Interkalierung und Interkalierung von Lithiumionen fähig ist, und wobei der positive Stromabnehmer ein Metall oder eine Metalllegierung oder ein leitfähiges Metallverbundmaterial umfasst.

## Revendications

1. Batterie secondaire comprenant une électrode négative de batterie, un électrolyte, un séparateur et une électrode positive de batterie, **caractérisée en ce que**
l'électrode négative de la batterie comprend un collecteur de courant négatif; le collecteur de courant négatif comprend un matériau conducteur qui peut être un métal, un alliage métallique ou un matériau composite métallique, et le collecteur de courant négatif agit également comme un matériau actif négatif, le collecteur de courant négatif étant un aluminium poreux enveloppé d'un matériau de carbone;
l'électrolyte comprend un sel d'électrolyte, un solvant et un additif, et le sel d'électrolyte est un sel de lithium, l'additif comprend un ou plusieurs additifs organiques de type ester, sulfone, éther, nitrile ou alcène;
l'électrode positive de la batterie comprend un collecteur de courant positif et une couche de matériau actif positif, la couche de matériau actif positif comprend un matériau actif positif capable de désintercaler et d'intercaler les ions lithium de manière réversible, et le collecteur de courant positif comprend un matériau conducteur qui peut être un métal, un alliage métallique ou un matériau composite métallique.

2. La batterie secondaire selon la revendication 1, **caractérisée en ce que** le collecteur de courant positif comprend l'un quelconque des métaux suivants: aluminium, magnésium, lithium, vanadium, cuivre, fer, étain, zinc, nickel, titane et manganèse, ou un composé de l'un quelconque de ces métaux, ou un alliage de l'un quelconque de ces métaux.

3. Batterie secondaire selon la revendication 1, **caractérisée en ce que** le matériau actif positif comprend un ou plusieurs matériaux choisis dans le groupe constitué par l'oxyde de cobalt-lithium, l'oxyde de nickel-lithium, l'oxyde de manganèse-lithium, le phosphate de fer-lithium, le matériau binaire d'oxyde de nickel-cobalt-lithium, l'oxyde avec structure spinelle, le matériau ternaire d'oxyde de nickel-cobalt-manganèse-lithium, et un matériau stratifié riche en lithium et en manganèse, ou un matériau composite de l'un de ces matériaux choisis dans le groupe.

4. Batterie secondaire selon la revendication 1, **caractérisée en ce que** le sel d'électrolyte comprend un ou plusieurs des éléments suivants: hexafluorophosphate de lithium, perchlorate de lithium, tétrafluoroborate de lithium, acétate de lithium, salicylate de lithium, acétoacétate de lithium, carbonate de lithium, trifluorométhanesulfonate de lithium, laurylsulfate de lithium, citrate de lithium, bis(triméthylsilyl)amide de lithium, hexafluoroarsénate de lithium et bis(trifluorométhanesulfonyl)imide de lithium, et ayant une concentration comprise entre 0,1 et 10 mol/L, de préférence entre 0,5 et 2 mol/L.

5. Batterie secondaire selon la revendication 3, **caractérisée en ce que** le sel d'électrolyte est l'hexafluorophosphate de lithium ayant une concentration de 1 mol/L.

6. Batterie secondaire selon la revendication 1, **caractérisée en ce que** le solvant comprend un ou plusieurs des solvants organiques ester, sulfone, éther et nitrile, ainsi que des liquides ioniques.

7. Batterie secondaire selon la revendication 1, **caractérisée en ce que** le solvant est le carbonate d'éthylène, le carbonate d'éthyle méthyle et le carbonate de diméthyle avec un rapport de volume de 1:1:1.

8. Batterie secondaire selon la revendication 1, **caractérisée en ce que** le solvant est le carbonate d'éthylène et le carbonate d'éthyle méthyle avec un rapport de volume de 1:1.

9. Batterie secondaire selon la revendication 1, **caractérisée en ce que** l'additif comprend un ou plusieurs des éléments suivants: carbonate de fluoroéthylène, carbonate de vinylène, carbonate de vinyle éthylène, 1,3-propanesultone, 1,4-butanesultone, sulfate d'éthylène, sulfate de propylène, sulfate de vinylène, sulfite d'éthylène, sulfite de propylène, diméthylsulfite, diéthylsulfite, sulfite de vinylène, chloroformate de méthyle, sulfoxyde de diméthyle, anisole, acétamide, diazine, pyrimidine, éther couronne/12-couronne-4, éther couronne/18-couronne-6, 4-fluoroanisole, éther non cyclique fluoré, carbonate de difluorométhyle et d'éthylène, carbonate de trifluorométhyle et d'éthylène, carbonate de chloroéthylène, carbonate de bromoéthylène, acide phosphonique trifluorométhyle, bromobutyrolactone, fluoroacétate d'éthyle, phosphate, phosphite, phosphazène, éthanolamine, carbodiimide, cyclobutyl sulfone, 1,3-dioxolane, acétonitrile, alcène à longue chaîne, oxyde d'aluminium, oxyde de magnésium, oxyde de baryum, carbonate de sodium, carbonate de calcium, dioxyde de carbone, dioxyde de soufre et carbonate de lithium, et dans l'électrolyte, la teneur de l'additif varie de 0,1 à 20 % en poids.

10. Batterie secondaire selon la revendication 1, **caractérisée en ce que** l'additif est le carbonate de vinylène, et dans laquelle la teneur de l'additif dans l'électrolyte est de 5 % en poids.

11. Batterie secondaire selon la revendication 9, **caractérisée en ce que** dans l'électrolyte, l'additif est le carbonate de vinylène, le sulfite d'éthylène, le sulfite de propylène ou le sulfite de vinylène, et la teneur de l'additif se situe entre 1 et 5 % en poids.

12. Batterie secondaire selon la revendication 1, **caractérisée en ce que** la couche de matériau actif positif comprend en outre un agent conducteur et un liant, la teneur du matériau actif positif est de 60 à 95 % en poids, la teneur en agent conducteur est de 0,1 à 30 % en poids, et la teneur en liant est de 0,1 à 10 % en poids.

13. Batterie secondaire selon la revendication 1, **caractérisée en ce que** le séparateur est un film polymère poreux isolant ou un film poreux inorganique, y compris un ou plusieurs parmi un film de polypropylène poreux, un film de polyéthylène poreux, un film de polymère composite poreux, un film à base de fibre de verre, et un séparateur céramique poreux.

14. Procédé de préparation de la batterie secondaire selon l'une quelconque des revendications 1 à 13, **caractérisé en ce qu'**elle comprend les étapes suivantes:
préparation d'une électrode négative, dans laquelle l'aluminium poreux enveloppé dans un matériau de carbone est coupé à la taille souhaitée, lavé, puis utilisé comme électrode négative, l'aluminium poreux enveloppé dans le matériau de carbone agissant simultanément comme un collecteur de courant négatif et un matériau actif négatif;
préparation d'un électrolyte, dans lequel une certaine quantité de sel de lithium et d'additif est pesée et ajoutée à un solvant approprié, entièrement remuée et dissoute pour obtenir un électrolyte;
préparation d'un séparateur, dans lequel un film polymère poreux, un film poreux inorganique ou un film en fibre de verre est découpé à la taille souhaitée et lavé;
préparation d'une électrode positive pour batteries, dans laquelle un matériau actif positif, un agent conducteur et un liant sont pesés selon un certain rapport, ajoutés à un solvant approprié et suffisamment broyés pour former une boue uniforme; un matériau conducteur constitué de métal, d'un alliage métallique ou d'un composite métallique est utilisé comme collecteur de courant positif, après que sa surface a été nettoyée; la boue est ensuite appliquée uniformément sur une surface du collecteur de courant positif et, après le séchage complet de la boue pour former une couche de matériau actif positif, le collecteur de courant positif est découpé avec la couche de matériau actif positif pour obtenir une électrode positive de batterie ayant la taille souhaitée; et
assemblage séquentiel de l'électrode négative de la batterie, de l'électrolyte, du séparateur et de l'électrode positive de la batterie a fin d'obtenir une batterie secondaire.

15. Batterie secondaire comprenant une électrode négative de batterie, un électrolyte, un séparateur et une électrode positive de batterie, **caractérisée en ce que**
l'électrode négative de la batterie comprend un collecteur de courant négatif; le collecteur de courant négatif comprend un matériau conducteur constitué de métal, d'un alliage métallique ou d'un composite métallique, et le collecteur de courant négatif agit également en tant que matériau actif négatif, le collecteur de courant négatif étant un matériau composite multicouche d'aluminium;
l'électrolyte comprend un sel d'électrolyte, un solvant et un additif, et le sel d'électrolyte est un sel de lithium, tandis que l'additif comprend un ou plusieurs additifs organiques de type ester, sulfone, éther, nitrile ou alcène;
l'électrode positive de la batterie comprend un collecteur de courant positif et une couche de matériau actif positif, la couche de matériau actif positif comprend un matériau actif positif capable de désintercaler et d'intercaler les ions lithium de manière réversible, et le collecteur de courant positif comprend un matériau conducteur qui peut être constitué d'un métal, d'un alliage métallique ou d'un composite métallique.
